(19) **Europäisches Patentamt / European Patent Office / Office européen des brevets**

(11) **EP 2 692 567 A1**

(12) # EUROPEAN PATENT APPLICATION
published in accordance with Art. 153(4) EPC

(43) Date of publication:
**05.02.2014 Bulletin 2014/06**

(21) Application number: **12765050.5**

(22) Date of filing: **23.03.2012**

(51) Int Cl.:
**B60K 7/00** *(2006.01)*     **B60G 9/04** *(2006.01)*

(86) International application number:
**PCT/JP2012/057632**

(87) International publication number:
**WO 2012/133245 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011  JP 2011078416**

(71) Applicant: **Aisin Seiki Kabushiki Kaisha Aichi 448-8650 (JP)**

(72) Inventors:
• **YAMANAKA, Toshihiko**
  **Kariya-shi,**
  **Aichi 448-8650 (JP)**

• **MORI, Kyosuke**
  **Kariya-shi,**
  **Aichi 448-8650 (JP)**
• **TAHARA, Yasuaki**
  **Kariya-shi,**
  **Aichi 448-8650 (JP)**
• **KAJIKAWA, Atsushi**
  **Kariya-shi,**
  **Aichi 448-8650 (JP)**

(74) Representative: **TBK**
  **Bavariaring 4-6**
  **80336 München (DE)**

(54) **IN-WHEEL MOTOR APPARATUS**

(57)     An in-wheel motor apparatus can be mounted using a simple suspension structure and suppress changes in vehicle height caused by a driving force without complicating or drastically changing the suspension mechanism structure. The in-wheel motor apparatus includes an in-wheel motor loaded on a wheel having a rotational shaft extending in a transverse direction of a vehicle body. The in-wheel motor and the wheel are suspended by a suspension mechanism retained by the vehicle body such that movement of the suspension mechanism in the transverse direction is restricted. The in-wheel motor is loaded on the wheel such that a rotational shaft axis of the in-wheel motor is orthogonal to, oblique to, or non-intersecting from a rotational shaft axis of the wheel.

FIG.1

EP 2 692 567 A1

**Description**

[Technical Field]

(Description of related application)

The present invention is based on claiming the priority of Japanese Patent Application No. 2011-078416 (filed on March 31, 2011), whose disclosure is in its entirety incorporated herein by reference thereto.

The present invention relates to an in-wheel motor apparatus, and more specifically, to an in-wheel motor apparatus loaded on a vehicle including a beam suspension mechanism.

[Background Art]

A vehicle suspension apparatus disclosed in Patent Literature 1 includes a suspension member for coupling an axle to a vehicle body in which an in-wheel motor is fixed to the suspension member. A link mechanism serving as a suspension is added between the suspension member and the vehicle body, which reduces the vertical force of the vehicle caused by a driving reaction force of the in-wheel motor, attempting to suppress changes in vehicle height.

A vehicle driving wheel structure disclosed in Patent Literature 2 includes two in-wheel motors per wheel. A vertical force of the vehicle caused by a driving reaction force of one in-wheel motor compensates for another vertical force of the vehicle caused by a driving reaction force of the other in-wheel motor, attempting to suppress the changes in vehicle height due to the driving force of the in-wheel motors. In this vehicle driving wheel structure, two in-wheel motors are loaded per wheel, and thus it has a complicated suspension link added to a suspension mechanism.

Patent Literature 3 discloses a general in-wheel motor structure in which a driving shaft of a wheel and a rotational shaft of an in-wheel motor are positioned coaxially.

[Citation List]

[Patent Literature]

[Patent Literature 1]
Japanese Unexamined Patent Publication No. 2010-228544
[Patent Literature 2]
Japanese Unexamined Patent Publication No. 2007-269209
[Patent Literature 3]
Japanese Unexamined Patent Publication No. 2010-105476

[Summary of Invention]

[Technical Problem]

The disclosures of Patent Literatures 1, 2, and 3 is incorporated herein by reference in their entirety. The following analysis is made by the present invention.
The vehicle suspension apparatus of Patent Literature 1 has problems of an increase in number of parts of the suspension apparatus by addition of the link mechanism, a complicated structure of the suspension apparatus, and the necessity of modification to a mounting manner of a shock absorber.

The vehicle driving wheel structure of Patent Literature 2 has problems of addition of the suspension links due to the necessity of supporting the two in-wheel motors per wheel, thus leading to complication of the suspension mechanism and an increase in cost.

In the general in-wheel motor system disclosed in Patent Literature 3, the driving shaft of the wheel and the rotational shaft of the in-wheel motor are positioned coaxially, causing a change in vehicle height due to the driving force of the in-wheel motor.

Accordingly, it is an object of the present invention to provide an in-wheel motor apparatus that can be mounted using a simple suspension structure and which can suppress changes in vehicle height caused by a driving force without complicating or drastically changing the structure of a suspension mechanism.

[Solution to Problem]

According to a first aspect of the invention, there is provided an in-wheel motor apparatus, wherein a wheel having a rotational shaft axis extending in a transverse direction of a vehicle body and an in-wheel motor loaded on the wheel are suspended by a suspension mechanism which is retained by the vehicle body such that movement of the suspension mechanism in the traverse direction is restricted, and wherein the in-wheel motor is loaded on the wheel such that a rotational shaft axis of the in-wheel motor is orthogonal to, oblique to, or non-intersecting from a rotational shaft axis of the wheel.

The present invention provides an arrangement of the in-wheel motor appropriate for the suspension mechanism with a simple structure. This arrangement can save a space inside the wheel required for accommodating the in-wheel motor apparatus, and thus can easily position other mechanisms to be accommodated in the wheel, for example, a brake mechanism or a rotation sensor required for motor control. In the present invention, even the use of the simple suspension mechanism can suppress the changes in vehicle height.

That is, the positional relationship between the in-wheel motor and the wheel in the present invention causes the reaction force applied to the in-wheel motor to act in the direction in which the movement of the suspension mechanism is restricted, that is, in the transverse direction. Even when the reaction force is generated upon acceleration or deceleration of the vehicle, the changes in vehicle height (pop-up of the driving force) can be suppressed.

More specifically, the wheel and the in-wheel motor are mounted to the vehicle body while restricting the movements of the wheel and motor in the transverse direction. Upon acceleration or deceleration of the vehicle, the reaction force against the driving force of the in-wheel motor is transferred from the vehicle wheel to the suspension mechanism via the in-wheel motor, and then to the vehicle body. This reaction force acts to move the in-wheel motor in the transverse direction based on the positional relationship between the wheel and the in-wheel motor. The in-wheel motor, however, is supported by the suspension mechanism whose movement in the transverse direction is restricted. Even when the reaction force is generated, the changes in vehicle height can be suppressed.

[Brief Description of Drawings]

Fig. 1 is a back view of an in-wheel motor apparatus according to one exemplary embodiment of the present invention;
Fig. 2 is a top plan view of the in-wheel motor apparatus shown in Fig. 1;
Fig. 3 is a perspective view of a suspension mechanism supporting the in-wheel motor apparatus shown in Fig. 1;
Fig. 4 is an explanatory diagram of an in-wheel motor apparatus in a comparative example;
Figs. 5(A) and 5(B) are diagrams showing gear mechanisms used in in-wheel motor apparatuses according to other exemplary embodiments of the invention;
Fig. 6 is a back view of the in-wheel motor apparatus in the one exemplary embodiment of the invention in the same manner as Fig. 1, while additionally showing hatching, and reference numerals 6a, 10, and 10a; and
Fig. 7 is a top plan view of the in-wheel motor apparatus shown in Fig. 1 in the same manner as Fig. 2, while additionally showing hatching.

[Description of Embodiments]

An in-wheel motor apparatus in a vehicle according to a preferred exemplary embodiment of the invention is provided which includes an in-wheel motor to be loaded on a wheel having a rotational shaft (axis) extending in a transverse direction of a vehicle body. A suspension mechanism is adapted to suspend the in-wheel motor and the rotation shaft of the wheel by being retained by the vehicle body such that the movement of the suspension mechanism in the transverse direction is restricted. The in-wheel motor is loaded on the wheel in a vehicle such that the rotational shaft axis of the in-wheel motor is orthogonal to, oblique to, or non-intersecting (offset from) the rotational shaft axis of the wheel.

In the preferred exemplary embodiment of the invention, the rotational shaft axis of the in-wheel motor is orthogonal to, intersects with an angle (is oblique to), or does not intersect with an angle (is offset from) the rotational shaft axis of the wheel.

In a preferred exemplary embodiment of the invention, the suspension mechanism includes left and right arms respectively disposed on the left and right sides of the vehicle body to extend in the front and back directions of the vehicle body, and a beam extending in the left and right directions of the vehicle body to connect the left and right arms to form a rigid body. The left and right arms are retained by the vehicle body such that the movements of the arms in the transverse direction (substantially in the horizontal direction) are restricted. The left arm rigidly supports a hub of the left wheel and the in-wheel motor loaded on the left wheel, and the right arm rigidly supports a hub of the right wheel and the in-wheel motor loaded on the right wheel. According to this exemplary embodiment, the reaction force against the driving force of the in-wheel motor acts in a direction in which the movement of the suspension mechanism supporting the in-wheel motor is restricted to suppress the changes in vehicle height and the movement of the vehicle in the left and right directions.

In another preferred exemplary embodiment of the invention, a bevel gear mechanism is connected in a power transmission path between the rotational shaft of the in-wheel motor and the rotational shaft of the wheel. The bevel gear mechanism is adapted to reduce rotational speed of the driving power between a plurality of gears having respective shaft axes intersecting each other. The rotational shaft axis of the in-wheel motor is orthogonal to or oblique to the rotational shaft axis of the wheel. Alternatively, preferably, a non-intersecting gear mechanism is connected in the power transmission path between the in-wheel motor and the wheel. The non-intersecting gear mechanism is adapted to reduce rotational speed of the driving power between a plurality of gears whose shaft axes are non-intersecting (offset from) each other. The rotational shaft axis of the in-wheel motor is non-intersecting (offset from) the rotational shaft axis of the wheel. According to these exemplary embodiments, the gear mechanism having a rotational-speed-reducing function converts the direction of the driving force generated by the in-wheel motor.

In another preferred exemplary embodiment of the invention, the in-wheel motor can be disposed on the opposite side to a brake caliper for braking the wheel via the rotational shaft of the wheel. In this way, the in-wheel motor is disposed in a space on one side of the rotational shaft of the wheel, which can generate an extra space on the other side of the rotational shaft, in which the brake caliper can be easily accommodated.

In another preferred exemplary embodiment of the invention, the in-wheel motor is supported by the suspension mechanism whose movement in the transverse direction of the vehicle body is restricted, or which never has flexibility in moving in the transverse direction. Such a suspension mechanism can have a simple structure.

In another preferred exemplary embodiment of the invention, the movement of the suspension mechanism in the transverse direction, for example, in the front-back direction or left-right direction of the vehicle body is restricted. A rotation plane of the rotational shaft of the in-wheel motor intersects a rotation plane of the rotational shaft of the wheel. The rotation plane of the rotational shaft of the in-wheel motor has a component in the transverse direction (in the left-right direction and the front-back direction of the vehicle body, that is, in the direction of the plane extending in the transverse direction).

In another preferred exemplary embodiment of the invention, the in-wheel motor is rigidly mounted to the suspension mechanism. This exemplary embodiment simplifies the structure for supporting the in-wheel motor.

In another preferred exemplary embodiment of the invention, a hub mounting side of the wheel on which the in-wheel motor is loaded is rigidly mounted to the suspension mechanism. This exemplary embodiment simplifies the structure for supporting the wheel.

In another preferred exemplary embodiment of the invention, a hub mounting side of the wheel on which the in-wheel motor is loaded is rigidly mounted together with the in-wheel motor. This exemplary embodiment simplifies the structure for supporting the wheel and the in-wheel motor.

In another preferred exemplary embodiment of the invention, the in-wheel motor apparatus is loaded on a vehicle having a suspension system to which left and right wheels are coupled, and more specifically, a vehicle having a torsion beam suspension structure. The in-wheel motor apparatus of the invention is suitably loaded on four-wheel-drive car driven by the in-wheel motor, or a rear side of a FF car whose front wheels are driven by a front engine.

In another preferred exemplary embodiment of the invention, the in-wheel motor is loaded on a shaft (or axis) part (i.e., mounting part of wheel shaft) of the torsion beam type suspension mechanism.

In another preferred exemplary embodiment of the invention, the in-wheel motor apparatus of the invention can be loaded on one wheel, or at least one pair of left and right wheels of the vehicle body. In some cases, the in-wheel motor apparatus can be respectively loaded on two pairs of left and right wheels.

In another preferred exemplary embodiment of the invention, in a power transmission path between the rotational shaft of the in-wheel motor and the rotational shaft of the wheel, a gear mechanism for converting the direction of the rotational force to reduce rotational speed of driving power is connected. The gear mechanism is for example, an intersecting gear mechanism with shaft axes intersecting at an angle of 90 degrees, or an intersecting gear mechanism with shaft axes intersecting at an angle other than 90 degrees, or a non-intersecting (offset) gear mechanism with shaft axes not intersecting. Specifically, the gear mechanisms include a helical gear assembly, a spiral bevel gear assembly, an angular bevel gear assembly, a hypoid gear assembly, or a worm and wheel assembly.

In another preferred exemplary embodiment of the invention, the non-intersecting (offset) gear mechanism is a hypoid gear.

In another preferred exemplary embodiment of the invention, the in-wheel motor is disposed on the upper side of the vehicle body with respect to the rotational shaft of the wheel.

In another preferred exemplary embodiment of the invention, a gear member for coupling (power-connecting) the rotational shaft of the in-wheel motor to the rotational shaft of the wheel is integrally formed with at least one of the rotational shafts.

The in-wheel motor apparatus according to the preferred exemplary embodiments of the invention can use various types of motors, from which an appropriate one can be selected depending on the type of a vehicle-mounted suspension mechanism or driving mechanism. Among them, specifically, a small-sized mechanism is preferable. For example, the use of a miniaturized permanent magnet motor allows more easily to mount the in-wheel motor in a small space inside the wheel such that the rotational shaft axis of the in-wheel motor is orthogonal to, oblique to, or non-intersecting (offset) from the rotational shaft axis of the wheel.

In another exemplary embodiment of the invention, an in-wheel motor suspension assembly is provided which includes the in-wheel motor apparatus and the suspension mechanism according to the preferred exemplary embodiment of the invention.

First Exemplary Embodiment

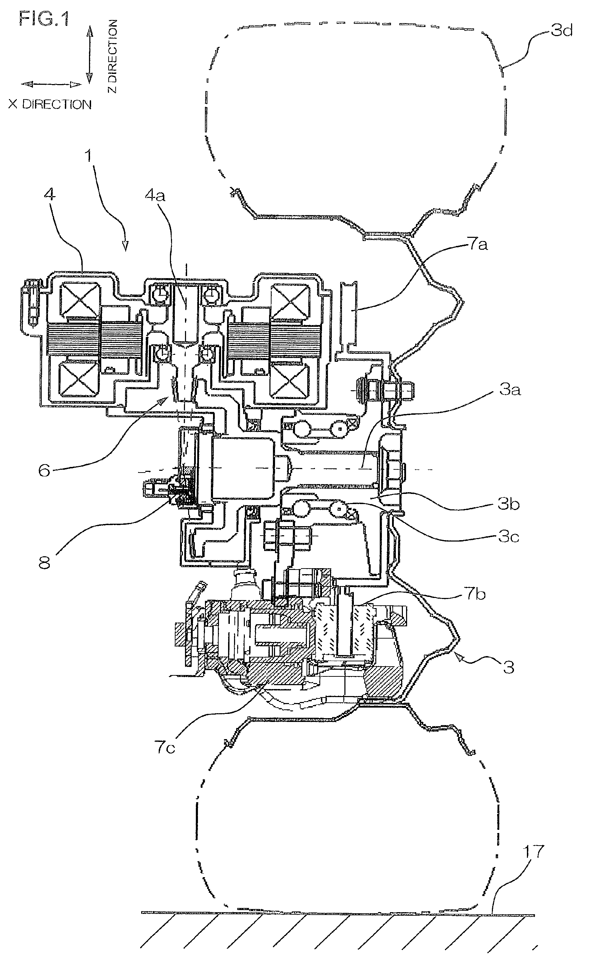

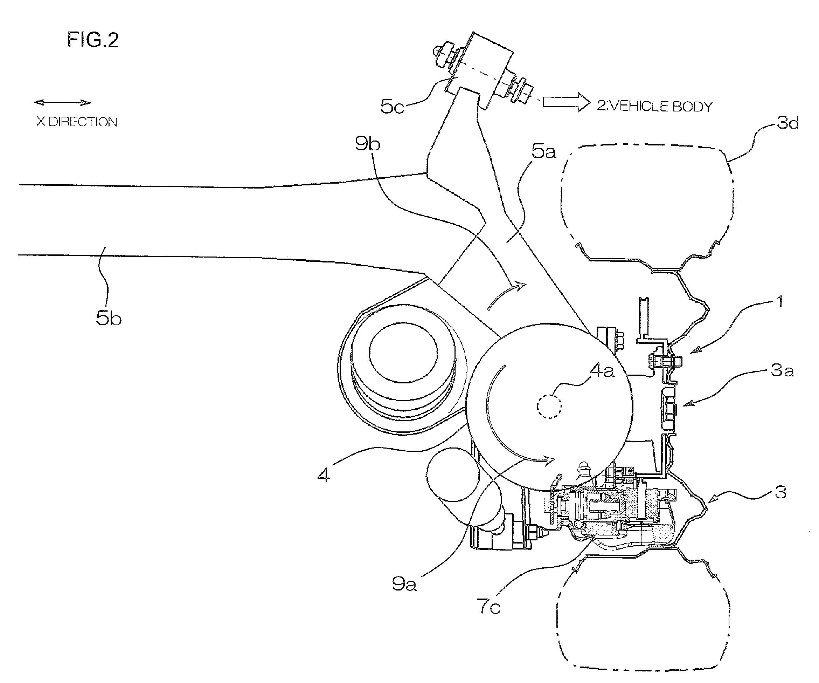

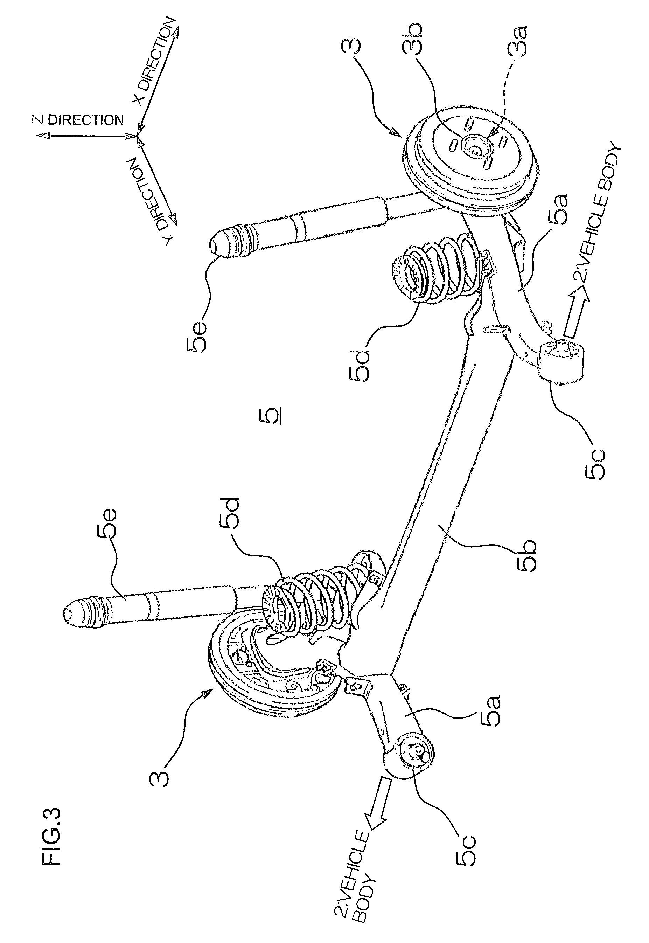

An in-wheel motor apparatus according to one exemplary embodiment of the invention will be described below with reference to the accompanying drawings. Fig. 1 shows a back view of the in-wheel motor apparatus in the one exemplary embodiment of the invention as viewed from the back of the vehicle. Fig. 2 shows a top plan view of the in-wheel motor apparatus shown in Fig. 1 as viewed from the upper side of the vehicle. Fig. 3 shows a perspective view of a suspension mechanism for supporting the in-wheel motor apparatus in the one exemplary embodiment of the invention.

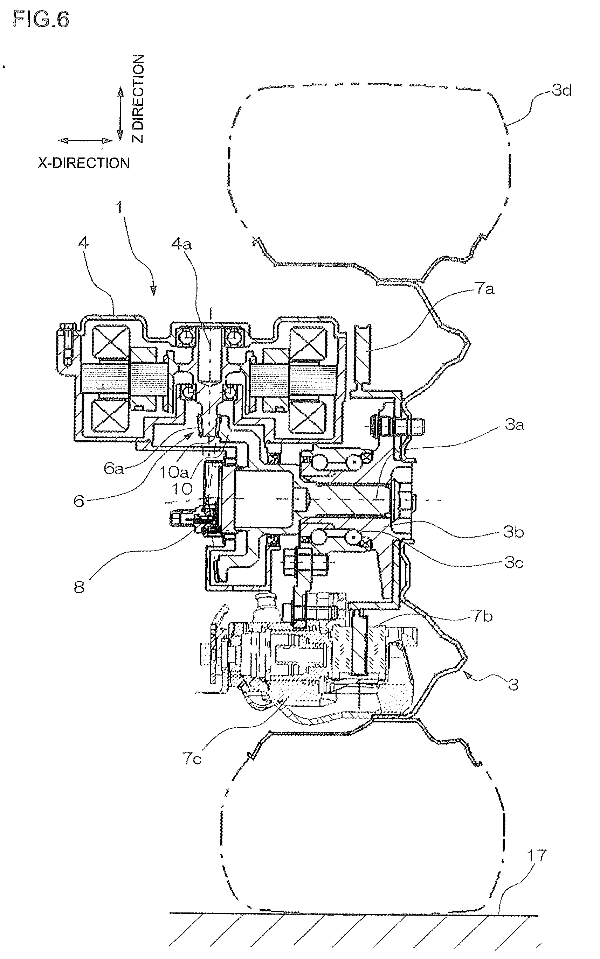

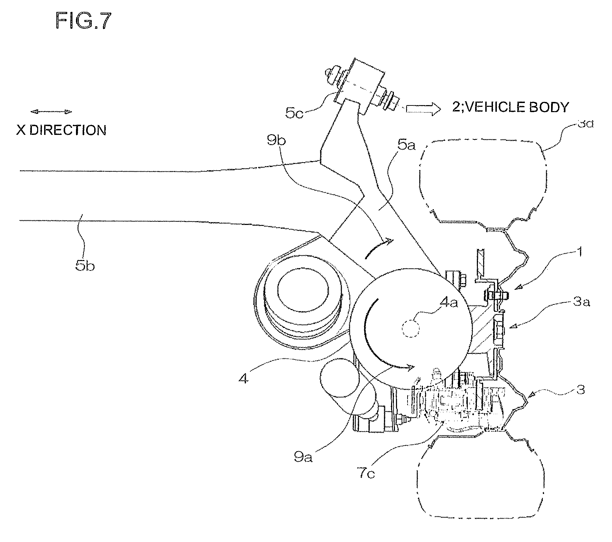

Referring to Fig. 1 (Fig. 6) and Fig. 2 (Fig. 7), a vehicle on which an in-wheel motor apparatus 1 of the one exemplary embodiment of the invention is loaded includes a wheel 3 having a rotational shaft 3a extending in the transverse (left-right) direction of a vehicle body 2, an in-wheel motor (electric motor) 4 loaded on the wheel 3, and a suspension mechanism 5 (see Fig. 3) mounted (retained) to the vehicle body 2 such that its movement in the transverse direction is restricted, and adapted to suspend a rotational shaft 3a of the wheel 3 and the in-wheel motor 4.

The in-wheel motor 4 is mounted on the vehicle wheel 3 such that the axis of a rotational shaft 4a of the in-wheel motor 4 is orthogonal to, oblique to, or non-intersecting (or offset from) the axis of a rotational shaft 3a of the wheel 3. Figs. 1 (6), and 2 (7) show the state of the rotational shaft 4a orthogonal to the rotational shaft 3a.

In a power transmission path between the rotational shaft 4a of the in-wheel motor 4 and the rotational shaft 3a of the wheel 3, a bevel gear mechanism 6 comprised of a plurality of gears whose shaft axes intersect each other is connected for reducing rotational speed of the power between these gears. The gear mechanism 6 shown in Figs. 1 and 2 changes (defects) the direction of the driving force of the rotational axis 4a and transfers the driving force to the rotational shaft 3a of the wheel 3. A gear member 10 for coupling (power-connecting) the rotational shaft 4a of the in-wheel motor 4 and the rotational shaft 3a of the wheel 3 is integrally formed with at least one of the rotational shafts 3a and 4a. Teeth 6a are cut in the rotational shaft 4a of the in-wheel motor 4, and teeth 10a are cut in the gear member 10 to be meshed with the teeth 6a. This structure has the effects of eliminating the necessity of the link(s), reducing the number of parts, and simplifying the structure itself.

The rotational shaft 3a of the wheel 3 is rotatably supported via a hub 3b and a hub bearing 3c fitted into the gear member 10. A tire 3d is mounted on the outer periphery of the hub 3b. A brake disk 7a is mounted to the outer peripheral side of the rotational shaft 3a. The brake disk 7a is opposed to a brake pad 7b in the axial direction. The brake pad 7b is opposed to a brake caliper 7c in the axial direction. Upon braking the wheel 3, the brake caliper 7c urges the brake pad 7b to press the pad against the brake disk 7a.

The in-wheel motor 4 is disposed on the opposite side, straddling (across) the rotational shaft 3a of the wheel 3, to the brake caliper 7c for braking the wheel 3 by way of example in this exemplary embodiment. In this way, the in-wheel motor 4 is disposed in a space on one side of the rotational shaft 3a of the wheel 3, which can generate an extra space on the other side of the rotational shaft 3a, in which the brake caliper 7c can be easily accommodated. The in-wheel motor 4 is preferably positioned above the rotational shaft 3a for the purpose of waterproof (i.e., protecting the motor from water damage). The in-wheel motor 4 is preferably placed on the upper side of the vehicle body with respect to the rotational shaft 3a of the wheel 3. The in-wheel motor 4 can be positioned (in a space) under the rotational shaft 3a.

In a relationship with another suspension mechanism, the rotational shaft of the in-wheel motor 4 can be disposed also in the horizontal direction. As viewed from a plane perpendicular to the shaft axis of the wheel, the in-wheel motor can be positioned at any angular position (orientation) as long as the motor does not interfere with other components, such as a suspension or brake. Taking into consideration of the advantages of mounting (fixing) of the in-wheel motor 4, the motor is preferably fixed (secured) to a position near a suspension arm from the viewpoint of simplifying fixing means, effectively using the space, and reducing the number of component parts.

Also a rotation sensor 8 for measuring the number of rotation of the rotational shaft 3a is disposed axially opposed to the rotational shaft 3a of the wheel 3. That is, the rotation sensor 8 is disposed in a space formed between the in-wheel motor 4 and the brake caliper 7c opposed in the radial direction of the wheel 3. The rotation sensor 8 can also be disposed in another space, such as a back end of the in-wheel motor 4.

Fig. 3 shows a perspective view of a suspension mechanism for supporting the in-wheel motor apparatus shown in Fig. 1. Specifically, Fig. 3 shows a torsion beam suspension with a simple structure. Referring to Fig. 3, the suspension mechanism 5 includes trailing arms 5a, 5a disposed on the left and right sides of the vehicle body 2, respectively, to extend in the back-forth (longitudinal) direction of the vehicle 2, and a torsion beam 5b extending in the left-right (transverse) direction of the vehicle 2 to connect the left and right trailing arms 5a, 5a to form a rigid body (i.e., rigid connection).

The left and right training arms 5a, 5a have the ends thereof mounted to (retained by) the vehicle body 2 via arm bushings 5c, 5c so as to be swingable (pivotable) in the height direction of the vehicle 2 while the movement of the trailing arms in the transverse direction is restricted. The left training arm 5a rigidly supports a hub 3b of the left wheel 3 and the in-wheel motor 4 loaded on the left wheel 3, (to form a rigid connection). The right training arm 5a rigidly supports the hub 3b of the right wheel 3 and the in-wheel motor 4 loaded on the right wheel 3, (to form a rigid connection).

As a result, a suspension assembly including the left and right trailing arms 5a, 5a, the torsion beam 5b, and the in-wheel motor 4 has almost no flexibility in the transverse direction of the vehicle body 2 by the left and right arm bushing 5c, 5c. Thus, even when a reaction force 9b in the transverse direction opposed to a rotation torque 9a output from the in-wheel motor 4 acts on the suspension assembly including the in-wheel motor 4, the suspension assembly is suppressed from moving in the transverse direction. Referring to Fig. 2, in this exemplary embodiment, the rotation torque 9a and the reaction force 9b act in the counterclockwise and clockwise directions, respectively. Even though the rotation torque 9a and the reaction force 9b from the structure or arrangement of the gear mechanism 6 act in the clockwise and counterclockwise directions, respectively, the movement of the suspension assembly in the transverse direction can be suppressed.

The torsion beam 5b connecting the left and right training arms 5a, 5a together thereby positions the left and right wheels 3, 3 respectively supported by the left and right hubs 3b, 3b, while appropriately controlling the amount of rolling of the vehicle during cornering because of an adequate torsional stiffness. A coil spring 5d that contracts to absorb shock from a road and a shock absorber 5e that attenuates the vibration of the coil spring 5d intervene between the other ends of the left and right trailing arms 5a, 5a and the vehicle body 2.

In the way described above, the arrangement of the in-wheel motor 4 of the invention can be achieved by adopting the suspension mechanism 5 with the simple suspension structure.

The reason why a change in vehicle height is caused in a conventional in-wheel motor apparatus of a comparative example will be described below using one wheel model, before discussing of the reason why the in-wheel motor apparatus of the exemplary embodiment of the invention can suppress the changes in vehicle height such as upon starting up of the vehicle as shown in Figs. 1 and 2. In the in-wheel motor apparatus in the comparative example, unlike this exemplary embodiment, the rotational shaft of the in-wheel motor and the rotational shaft of the wheel are coaxially positioned. As to a suspension mechanism, however, a suspension mechanism 5 of the "torsion beam type" shown in Fig. 3 supports the in-wheel motor and the wheel like this exemplary embodiment.

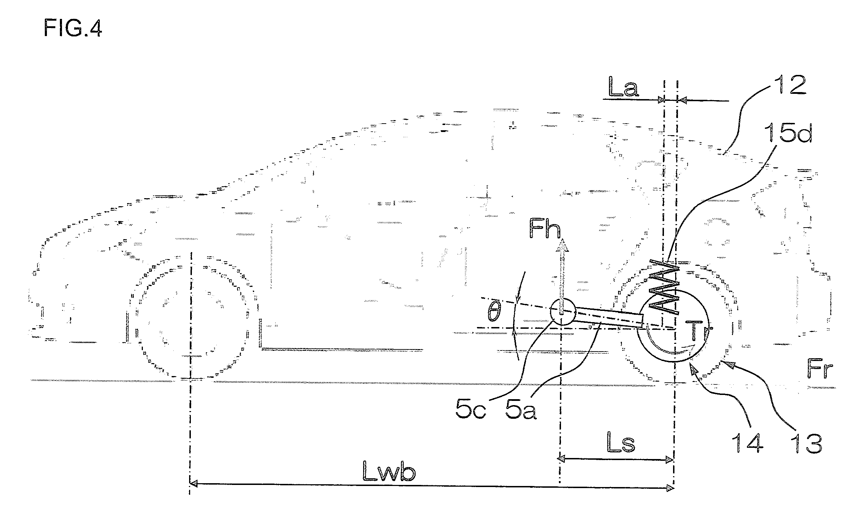

Fig. 4 shows an explanatory view of the in-wheel motor apparatus in the comparative example as viewed from the side of the vehicle. Referring to Fig. 4, the in-wheel motor apparatus in the comparative example has a structure in which the rotational shaft of an in-wheel motor of an in-wheel motor unit 14 and a rotational shaft of a rear wheel 13 are coaxially positioned. The in-wheel motor unit 14 (in-wheel motor) and the rear wheel 13 are mounted to the vehicle body 12 so as to be swingable in the height direction of the vehicle 12 via a trailing arm 5a with its movement in the transverse direction restricted. The rotation plane of the in-wheel motor within the in-wheel motor unit 14 and the rotation plane of the rear wheel 13 are parallel or identical to each other. A coil spring 15d adapted to contract to absorb shock from the road intervenes between the other end of the trailing arm 5a and the vehicle body 12.

Upon starting or accelerating the vehicle, in the in-wheel motor apparatus in the comparative example, the driving force from the in-wheel motor incorporated in the in-wheel motor unit 14 is transferred to the rear wheel 13. The in-wheel motor unit 14 (in-wheel motor) is rigidly mounted to the trailing arm 5a, so that the trailing arm 5a receives the reaction force against a driving force Fr acting on the rear wheel 13, as a rotation force around (about) the rotational shaft (axle) of the real wheel 13.

Thus, a force Fh acting upward on an arm bushing 5c supporting one end of the training arm 5a can be represented by the following formula:

$$Fh = Tr \cdot \cos\theta / Ls \qquad (1)$$

where Fh is a driving force generated by the in-wheel unit 14,
Ls is a length of the trailing arm 5a in the longitudinal direction, and
$\theta$ is a dihedral angle of the trailing arm 5a.

Balance between the forces is represented by the following formula:

$$Fh \cdot (Lwb - Ls) = Ks \cdot Hx \ (Lwb - La) \qquad (2)$$

where Ks is a spring constant of a coil spring 5d,
La is an offset of an mounting position of the coil spring 5d on a vehicle body side in the longitudinal direction of the vehicle from the position of the rotational shaft of the rear wheel 13, and
Lwb is a wheelbase of the vehicle.

By using the above formulas (1) and (2), the amount of change in vehicle height Hx at the mounting position of the coil spring 15d can be represented by the following formula.

$$Hx = Fh \cdot (Lwb - Ls)/Ks \cdot Hx \ (Lwb - La) \qquad (3)$$

By using the above formulas (1) and (3), the relationship between the torque of the in-wheel motor and the change in vehicle height can be represented by the formula below.

$$Hx = Tr \cdot \cos\theta \cdot (Lwb - Ls)/Ks \cdot Hx \ (Lwb - La) \qquad (4)$$

As can be seen from the formula (4), upon starting up or accelerating the vehicle, the application of a driving force from the in-wheel motor unit 14 to the real wheel 13 causes the rear end of the vehicle to float (lift up). The reason for this is as follows. The reaction force is exerted to the in-wheel motor of the in-wheel motor unit 14 in the vehicle height direction in which the movements of the in-wheel motor unit 14 and the suspension mechanism 5 are not restricted. This phenomenon is hereinafter referred to as a "driving force pop-up". The driving force pop-up gives a driver of the vehicle unnatural feeling.

As can be seen from the formula (4), upon decelerating the vehicle, for example, in regeneration braking using the in-wheel motor unit 14, the reaction force from the decelerating rear wheel 13 is finally transferred to the trailing arm 5a in the direction opposite to that generated upon starting up or acceleration of the vehicle, to push down the vehicle, thereby decreasing the vehicle height. When the force pushing down the vehicle height is exerted to the vehicle body 12, the driver of the vehicle feels unnatural, likewise the case of the driving force pop-up.

Further, upon turning on or off of an accelerator during traveling, the driver of the vehicle feels unnatural due to the occurrence of pitching of the vehicle, likewise the case of start-up, acceleration, or deceleration.

Next, the reason why the in-wheel motor apparatus of the one exemplary embodiment of the invention can suppress the change in vehicle height will be explained below.

In the in-wheel motor apparatus 1 of the one exemplary embodiment of the invention, the reaction force exerted to the in-wheel motor 4 acts in the direction in which the movement of the suspension mechanism 5 is restricted, that is, in the transverse direction. Even when the reaction force is generated during acceleration or deceleration of the vehicle, the change in vehicle height can be suppressed.

More specifically, the wheel 3 and the in-wheel motor 4 are mounted to the vehicle body 2 while the movements thereof in the transverse direction are restricted via the trailing arms 5a.

During acceleration or deceleration of the vehicle, the reaction force 9b against the driving force (rotation torque 9a) of the in-wheel motor 4 is transferred from the wheel 3 to the suspension mechanism 5 (trailing arms 5a) via the bevel gear mechanism 6 and the in-wheel motor 4, and then to the vehicle body 2. The reaction force 9b is exerted in the direction opposite to the rotational direction of the in-wheel motor 4, while acts as a force to move the in-wheel motor 4 and the trailing arm 5a in the transverse direction due to the positional relationship between the above wheel 3 and the in-wheel motor 4. The in-wheel motor 4, however, is supported by the suspension mechanism 5 or trailing arm 5a whose movement in the transverse direction is restricted. Accordingly, even when the reaction force 9b in the transverse direction is generated, the change in vehicle height can be suppressed.

The trailing arm 5a also has its movement restricted by the arm bushing 5c in the left-right direction of the vehicle body 2. Thus, even upon the occurrence of the reaction force 9b, the vehicle is greatly suppressed from moving in the transverse direction, particularly, in the left-right direction. In an actual layout, that is, in a two wheel model including the left and right wheels 3, 3 with the respective in-wheel motors 4 loaded thereon, when the left and right wheels 3, 3 are driven by the left and right in-wheel motors 4, 4, the left and right in-wheel motors 4, 4 rotate in the reverse direction to each other. Thus, the forces generated by the left and right wheels 3, 3 are set off (absorbed each other) by the trailing arms 5a, 5a and the arm bushings 5c, 5c for connecting the left and right wheels 3, 3 to the vehicle body 2 and by the torsion beam 5b that connects the left and right trailing arms 5a, 5a.

As mentioned above, the in-wheel motor apparatus 1 of the one exemplary embodiment of the invention is supported by the suspension mechanism 5 with the simple suspension structure, but also has the effect of suppressing the change in vehicle height or the driving force pop-up even upon exerting the driving force or braking force to both the left and right wheels 3, 3, like the case of exerting the driving force or braking force to one of the left and right wheels 3, 3.

Second Exemplary Embodiment

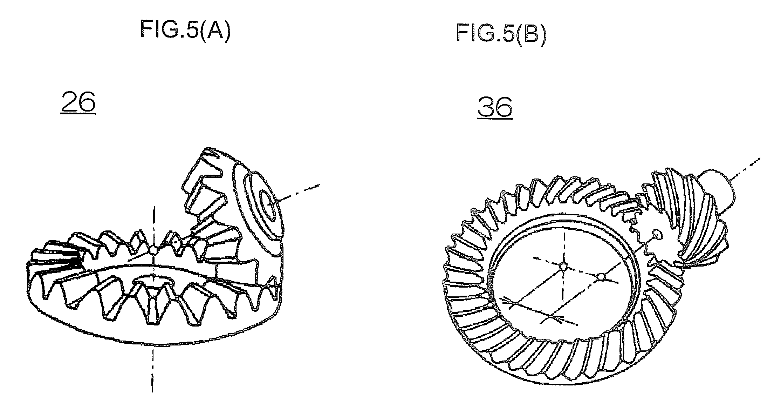

In the following will be described an in-wheel motor apparatus according to another exemplary embodiment of the invention with a structure other than the structure in which the rotational axis of an in-wheel motor is orthogonal to the rotational axis of the wheel. Figs. 5(A) and 5(B) are diagrams showing gear mechanisms used in in-wheel motor apparatuses according to other exemplary embodiments of the invention.

Referring to Fig. 5(A), in a power transmission path between the rotational axes of the in-wheel motor and the wheel, an oblique bevel gear mechanism 26 is connected (power-connected) which reduces rotational speed of the power between gears having respective shaft axes oblique to each other, instead of the bevel gear mechanism 6 of Fig. 1 including the gears having the shaft axes orthogonal to each other. The (power-)connection of the oblique bevel gear mechanism 26 can position the in-wheel motor such that the rotational shaft axis of the in-wheel motor is oblique to (intersects with an angle) the rotational shaft axis of the wheel.

Referring to Fig. 5(B), in a power transmission path between the rotational axis of the in-wheel motor and the rotational axis of the wheel, a hypoid gear mechanism 36 is connected (power-connected) which reduces rotational speed of the power between gears having respective shaft axes that are non-intersecting (offset) from each other, instead of the bevel gear mechanism 6 of Fig. 1 including the gears having respective shaft axes orthogonal to each other. That is, the non-intersecting mechanism is the hypoid gear mechanism (hypoid gear) 36. The (power-)connection of the hypoid gear mechanism 36 can position the in-wheel motor such that the rotational shaft axis of the in-wheel motor is non-intersecting (offset) from (do not intersect, with an angle) the rotational shaft axis of the wheel. Also these exemplary embodiments also exhibit the same effects as the case where the rotational shaft axis of the in-wheel motor is orthogonal to the rotational shaft axis of the wheel.

[Industrial Applicability]

The in-wheel motor apparatus of the invention is suitably loaded on a vehicle including a suspension mechanism whose movement in the transverse direction of the vehicle is restricted. Particularly, the in-wheel motor apparatus of the invention is suitably loaded on a vehicle including a beam suspension mechanism.

The entire disclosure of each of the above Patent Literatures is incorporated herein by reference in its entirety. Various modifications and changes can be made to the embodiments within the scope and spirit of the entire disclosure of the present invention (including components of each claim, components of each embodiment, components of each drawing, and the like) based on the basic technical concept of the invention. Further, various combinations or selections can be made to various components disclosed in the respective embodiments, examples, and drawings within the scope of the claims of the invention. That is, it is apparent that various modifications and variations can be made by those skilled in the art without departing from the scope of the invention according to the disclosure and technical concept including the claims of the invention.

[Reference Signs List]

| | |
|---|---|
| 1 | In-wheel motor apparatus |
| 2 | Vehicle body |
| 3 | Wheel |
| 3a | Rotational shaft of wheel |
| 3b | Hub |
| 3c | Hub bearing |
| 3d | Tire |
| 4 | In-wheel motor (electric motor) |
| 4a | Rotational shaft of in-wheel motor |
| 5 | Suspension mechanism |
| 5a, 5a | Left-right trailing arms |
| 5b | Torsion beam |
| 5c, 5c | Left-right arm bushings |

| 5d | Coil spring |
|----|----|
| 5e | Shock absorber |
| 6 | Bevel gear mechanism |
| 6a | Teeth |
| 7a | Brake disk |
| 7b | Brake pad |
| 7c | Brake caliper |
| 8 | Rotation sensor |
| 9a | Rotation torque (output from in-wheel motor) |
| 9b | Reaction force (reaction force of motor rotation torque) |
| 10 | Gear member |
| 10a | Teeth of gear |
| 17 | Ground (traveling surface) |
| 26 | Oblique bevel gear mechanism |
| 36 | Hypoid gear mechanism (hypoid gear) |
| X | Left-right (transverse) direction of vehicle |
| Y | Front-back (longitudinal) direction of vehicle |
| Z | Vehicle height direction of vehicle |

**Claims**

1. 1. An in-wheel motor apparatus, wherein
a wheel having a rotational shaft axis extending in a transverse direction of a vehicle body and an in-wheel motor loaded on the wheel are suspended by a suspension mechanism which is retained by the vehicle body such that movement of the suspension mechanism in the traverse direction is restricted, and
wherein the in-wheel motor is loaded on the wheel such that a rotational shaft axis of the in-wheel motor is orthogonal to, oblique to, or non-intersecting a rotational shaft axis of the wheel.

2. The in-wheel motor apparatus according to claim 1, wherein the suspension mechanism comprises:

left and right arms respectively disposed on left and right sides of the vehicle body to extend in a front-back direction of the vehicle body; and
a beam extending in a left-right (transverse) direction of the vehicle body to connect the left and right arms to form a rigid body,
wherein the left and right arms are retained by the vehicle body such that movements of the arms in the transverse direction are restricted,
wherein the left arm rigidly supports a hub of the left wheel and the in-wheel motor loaded on the left wheel, and
wherein the right arm rigidly supports a hub of the right wheel and the in-wheel motor loaded on the right wheel.

3. The in-wheel motor apparatus according to claim 1 or 2, wherein a bevel gear mechanism is connected in a power transmission path between the rotational shaft of the in-wheel motor and the rotational shaft of the wheel, said bevel gear mechanism being adapted to reduce rotational speed of driving power between a plurality of gears having respective shaft axes intersecting each other, and
wherein the rotational shaft axis of the in-wheel motor is orthogonal to or oblique to the rotational shaft axis of the wheel.

4. The in-wheel motor apparatus according to claim 1 or 2, wherein a non-intersecting gear mechanism is connected in a power transmission path between the in-wheel motor and the wheel, said non-intersecting gear mechanism being adapted to reduce rotational speed of driving power between a plurality of gears whose shaft axes are offset from each other, and
wherein the rotational shaft axis of the in-wheel motor is non-intersecting the rotational shaft axis of the wheel.

5. The in-wheel motor apparatus according to claim 4, wherein the non-intersecting gear mechanism is a hypoid gear.

6. The in-wheel motor apparatus according to any one of claims 1 to 5, wherein the in-wheel motor is disposed on a side opposite to a brake caliper for braking the wheel, straddling the rotational shaft of the wheel.

**7.** The in-wheel motor apparatus according to any one of claims 1 to 6, wherein the in-wheel motor is disposed on an upper side of the vehicle body with respect to the rotational shaft of the wheel.

**8.** The in-wheel motor apparatus according to any one of claims 1 to 7, wherein a gear member for coupling the rotational shaft of the in-wheel motor to the rotational shaft of the wheel is integrally formed with at least one of the rotational shafts.

**9.** An in-wheel motor suspension assembly, comprising the in-wheel motor apparatus according to any one of claims 1 to 8, and the suspension mechanism according to claim 1 or 2.

EP 2 692 567 A1

FIG.1

Z DIRECTION

X DIRECTION

11

FIG.2

← X DIRECTION →

5c

⟹ 2;VEHICLE BODY

9b

5a

3d

5b

1

4a

3a

4

3

9a

7c

EP 2 692 567 A1

FIG.3

FIG.4

FIG.5(A)

26

FIG.5(B)

36

FIG.6

FIG.7

X DIRECTION

5c

9b

5a

2;VEHICLE BODY

3a

5b

1

4a

3a

4

3

9a

7c

## INTERNATIONAL SEARCH REPORT

| International application No. |
| --- |
| PCT/JP2012/057632 |

A.  CLASSIFICATION OF SUBJECT MATTER
*B60K7/00*(2006.01)i, *B60G9/04*(2006.01)i

According to International Patent Classification (IPC) or to both national classification and IPC

B.  FIELDS SEARCHED

Minimum documentation searched (classification system followed by classification symbols)
B60K7/00, B60G9/04

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2005-249159 A  (Honda Motor Co., Ltd.), 15 September 2005 (15.09.2005), entire text; all drawings (Family: none) | 1-9 |
| Y | JP 2005-145132 A  (NTN Corp.), 09 June 2005 (09.06.2005), entire text; all drawings (Family: none) | 1-9 |
| Y | JP 2008-155694 A  (Honda Motor Co., Ltd.), 10 July 2008 (10.07.2008), entire text; all drawings (Family: none) | 3 |

☒  Further documents are listed in the continuation of Box C.          ☐  See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search   21 May, 2012 (21.05.12) | Date of mailing of the international search report   29 May, 2012 (29.05.12) |
| --- | --- |
| Name and mailing address of the ISA/   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/057632

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2008-213775 A (Honda Motor Co., Ltd.), 18 September 2008 (18.09.2008), paragraph [0043] (Family: none) | 4-5 |
| A | JP 2005-153557 A (NTN Corp.), 16 June 2005 (16.06.2005), entire text; all drawings (Family: none) | 1-3,6,9 |
| A | JP 2005-238989 A (NTN Corp.), 08 September 2005 (08.09.2005), entire text; all drawings (Family: none) | 1-2,6,9 |
| A | JP 2005-289288 A (NTN Corp.), 20 October 2005 (20.10.2005), entire text; all drawings (Family: none) | 1,7,9 |

Form PCT/ISA/210 (continuation of second sheet) (July 2009)

**EP 2 692 567 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011078416 A
- JP 2010228544 A
- JP 2007269209 A
- JP 2010105476 A